# EUROPÄISCHE PATENTANMELDUNG

(11) **EP 1 348 344 A1**
(43) Veröffentlichungstag der Anmeldung: **01.10.2003**
(21) Anmeldenummer: 03005861.4
(22) Anmeldetag: 15.03.2003
(51) Int. Cl.: A23L 2/52, A23L 1/30

(54) **Coffeinhaltiges Getränkeerzeugnis**

(30) Priorität: 27.03.2002 DE 10214168
(71) Anmelder: Irion, Siegfried, 45479 Mülheim (DE)
(72) Erfinder: Irion, Siegfried, 45479 Mülheim (DE)
(74) Vertreter: Nunnenkamp, Jörg, Dr.

(57) **Zusammenfassung**

Gegenstand der vorliegenden Erfindung ist ein coffeinhaltiges Getränkeerzeugnis, welches als Hauptbestandteile neben Coffein, Zucker und einem Lösungsmittel, insbesondere Wasser, zusätzlich ein oder mehrere Entgiftungssubstanzen mit insbesondere antioxidativer Wirkung enthält. Darüber hinaus beinhaltet das vorgenannte Getränkeerzeugnis regelmäßig ein kräftigendes Tonikum, z. B. Ginsengwurzelextrakt.

## Beschreibung

Die Erfindung betrifft ein coffeinhaltiges Getränkeerzeugnis.

Bekanntermaßen handelt es sich bei Coffein bzw. 1, 3, 7-Trimethylxanthin um eine leicht wasserlösliche Substanz mit weißen Kristallnadeln und schwach bitterem Geschmack. Sie ist u. a. in dem Samen des Kaffeestrauchs und den Blättern des Teestrauchs (dort früher als Thein bezeichnet, wobei Thein mit Coffein chemisch identisch ist) sowie in Colanuss enthalten. Beispielsweise beinhaltet eine Tasse Kaffee ca. 10 mg Coffein, eine Tasse Tee ca. 30 mg und 1 l Colagetränk ca. 120 mg Coffein.

Von Coffein geht bekanntermaßen eine stimulierende Wirkung des zentralen Nervensystems sowie u. a. eine Beschleunigung der Herztätigkeit aus. Dieser Substanz wird also zutreffend eine belebende Wirkung zugemessen.

Hiervon machen zusätzlich zu beispielsweise Kaffee und Tee sogenannte Energiegetränke oder auch "Energy-Drinks" genannt, Gebrauch. Denn diese wirken nicht nur durststillend, sondern beleben durch ihren Coffeingehalt Körper und Geist und wirken anregend. Gleichzeitig besitzen sie zumeist einen hohen Gehalt an Kalorien, welcher durch die Zugabe einer entsprechenden Menge an Kohlenhydraten, Fetten und/oder Eiweißen erreicht wird.

In der Vergangenheit hat man bereits versucht, ein Energiegetränk mit hoher Haltbarkeit zur Verfügung zu stellen, welches nicht nur einen hohen Coffeingehalt und vorzugsweise auch einen hohen Kaloriengehalt besitzt, sondern darüber hinaus über aus natürlichen Quellen gewonnenes Coffein verfügt. Zu diesem Zweck wird ein Energiegetränk beschrieben, welches mindestens 1 g/l eines Guarandextraktes und mindestens 25 g/l eines Zuckers enthält (vgl. DE 199 37 079 A1).

Daneben kennt man im Stand der Technik ein lagerstabiles, ballaststoff- und süßstoffhaltiges Getränk mit stabilisiertem Säure/Süße-Verhältnis, wie es im Rahmen der DE 199 53 727 A1 beschrieben wird.

Die bekannten Getränkeerzeugnisse haben sich zwar bewährt, sind jedoch - was ihre Zielsetzung angeht - relativ einseitig auf eine belebende und kalorienspendende Wirkung hin ausgerichtet. Hier will die Erfindung Abhilfe schaffen.

Der Erfindung liegt das technische Problem zugrunde, ein coffeinhaltiges Getränkeerzeugnis, insbesondere ein Energiegetränk, so weiter zu entwickeln, dass nicht nur eine belebende Wirkung und Energiezufuhr erzielt wird, sondern mit dem Verzehr zusätzliche positive Wirkungen für den Organismus erreicht werden.

Zur Lösung dieser technischen Problemstellung ist Gegenstand der Erfindung ein coffeinhaltiges Getränkeerzeugnis, welches als Hauptbestandteile neben Coffein, einem Zucker und einem Lösungsmittel, insbesondere Wasser, zusätzlich ein oder mehrere Entgiftungssubstanzen mit insbesondere antioxidativer Wirkung sowie ggf. ein kräftigendes Tonikum, z. B. Ginsengwurzelextrakt, enthält.

Das beschriebene erfindungsgemäße coffeinhaltige Getränkeerzeugnis verfügt also - wie der Stand der Technik nach der DE 199 37 079 A1 - zunächst einmal über die Hauptbestandteile Coffein, Zucker sowie ein Lösungsmittel, bei dem es sich üblicherweise - aber nicht zwingend - um Wasser handelt. Denn an dieser Stelle könnte grundsätzlich auch ein Wasser-/Alkoholgemisch ebenso zum Einsatz kommen, wie ein Fruchtsaft, ein Milch(mix)getränk, Kakaogetränk etc. Zu diesen bekannten Ingredienzien tritt nun erfindungsgemäß eine Entgiftungssubstanz, wobei auch mehrere Entgiftungssubstanzen denkbar sind. Bei der Entgiftungssubstanz greift die Erfindung bevorzugt auf ein Derivat bzw. Abbauprodukt einer Aminosäure zurück. Bei der Aminosäure handelt es sich größtenteils um die schwefelhaltige Aminosäure Cystein, sodass als Entgiftungssubstanz vorzugsweise Taurine zum Einsatz kommen.

Diese Taurine lassen sich aus beispielsweise Ochsengalle gewinnen. Hierbei macht sich die Erfindung zunutze, dass sogenannte Gallensäuren, also die von den Leberzellen gebildeten biologisch wichtigsten Bestandteile der Galle, als gepaarte Gallensäuren vorliegen und sich aus zwei Bestandteilen zusammensetzen, nämlich einer hochmolekularen Säure sowie einer niedermolekularen Substanz, bei welcher es sich entweder um Glycin oder Taurin handelt.

Durch die Vereinigung der hochmolekularen Säure mit der niedermolekularen Substanz (Taurin) entstehen die gepaarten Gallensäuren, welche insbesondere den Fettstoffwechsel beschleunigen. Auf diese Weise führt der Zusatz der beschriebenen Entgiftungssubstanz bzw. des Taurins zu einer entgiftenden und gleichzeitig belebenden Wirkung.

Folglich zeichnet sich das erfindungsgemäße Getränkeerzeugnis bereits durch den beschriebenen Zusatznutzen aus, welcher die bekannten Wirkungen (belebend und anregend) durch die zusätzlich entgiftende Funktion ergänzt. - Das an dieser Stelle eingesetzte Taurin kann anstelle aus Ochsengalle auch aus Austern gewonnen werden, wobei sich seine Wirkung auf Membranschutz durch die Bindung toxischer Verbindungen wie Oxidationsmittel und sekundäre Cholsäuren konzentriert (vgl. DE 695 20 857 T2, Seite 3 m. w. N.).

Alternativ oder zusätzlich zu der zuvor beschriebenen Entgiftungssubstanz können auch Ether- oder Esterkonjugate von Pentaerythrit- oder oxidierten Pentaerythritresten mit Lactonen oder Dehydrolactonen von Onsäuren, Uronsäuren oder Zuckersäuren zum Einsatz kommen, insbesondere Glucuronolacton, Gulonolacton oder 2-Ketogulonolacton sowie deren Isomere. Dabei kommt auch diesen Entgiftungssubstanzen insbesondere eine antioxidative Wirkung zu, das heißt, toxische Verbindungen wie Oxidationsmittel werden gebunden.

Zusätzlich schlägt die Erfindung vor, dem Getränkeerzeugnis einen im menschlichen Körper enthaltenen Wachstumszusatz, insbesondere einen Zucker-Alkohol hinzuzufügen. Bei diesem Zucker-Alkohol mag es sich um ein Isomer der Glucose, vorzugsweise Inositol handeln. Inositol ist am Lipidstoffwechsel, also einem Teil des Stoffwechsels, welcher den Auf- und Abbau der Lipide umfasst (Fettstoffwechsel), beteiligt. Es findet sich in verschiedenen Getreiden, Früchten, Gemüse und Fleisch.

In der Regel fördert Inositol das Wachstum, und wird deshalb auch als "Wachstumsfaktor" bezeichnet, was auf die beschleunigte Sauerstoff-Abgabe aus dem Hämoglobin zurückzuführen ist.

Als Zucker kommt regelmäßig Traubenzucker und/oder Saccharose zum Einsatz. Dabei dient der Traubenzucker bzw. die synthetische Glucose wie die Saccharose primär dazu, den gewünschten kalorischen Energieinhalt des beschriebenen Getränkeerzeugnisses zur Verfügung zu stellen.

Bei dem als Option eingesetzten kräftigenden Tonikum handelt es sich zumeist um ein solches auf Ginsengbasis, welches also aus der Ginsengwurzel (Radix/Ginseng) gewonnen wird. Diese üblicherweise als Extrakt vorliegende Substanz enthält Ginsengoside, welche als Tonikum bei Müdigkeitsgefühl, nachlassender Leistungs- und Konzentrationsfähigkeit sowie in der Rekonvalenszenz verwendet werden. Folglich unterstützt dieses zusätzlich eingesetzte kräftigende Tonikum die ohnehin schon belebende und anregende sowie entgiftende Wirkung des beschriebenen coffeinhaltigen Getränkeerzeugnisses.

Ferner empfiehlt die Erfindung, Vitamine zuzusetzen, wobei in der Regel eine Vitaminmischung zum Einsatz kommt, die größtenteils die Vitamine B1, B6, B8, C und B12 alleine oder in beliebiger Kombination umfasst. Diese Vitamine können bekanntermaßen von einem Organismus nicht selbst synthetisiert werden, sind jedoch lebensnotwendig. Ihnen kommt zumeist eine katalytische Funktion zu, weshalb sie nur in ganz geringen Mengen benötigt werden. Jedenfalls sorgt die zusätzliche und mit dem beschriebenen Getränk erreichte Vitaminzufuhr dafür, dass etwaigen Mangelerscheinungen zuverlässig entgegengewirkt wird.

Ferner ist vorgesehen, dem beschriebenen Getränk Geschmacksstoffe, üblicherweise in Gestalt von entsprechenden Aromapulvern, zuzusetzen. Das gleiche gilt für eventuelle Farbstoffe und/oder Zitronensäure. - Schließlich stellt ein Konservierungsmittel, wie z. B. Kaliumsorbat, sicher, dass mehrmonatige Haltbarkeiten erreicht werden.

Der Anteil von Coffein beträgt in der Regel ca. 0,20 g/l oder mehr. Zucker wird zu mindestens 200 g/l zugesetzt. Der Anteil der einen oder der mehreren Entgiftungssubstanzen beläuft sich auf ca. 0,20 g/l oder mehr. Der Rest ist Wasser.

### Beispiel:

Folgende Rezeptur hat sich als vorteilhaft unter Berücksichtigung einer Ansatzgröße von 1 Liter erwiesen:

| | |
|---|---|
| Taurin | 0,30 g |
| Coffein | 0,25 g |
| Ginsengextrakt | 0,15 g |
| Pfirsich Aroma | 0,55 g |
| Passionsfrucht Aroma | 0,55 g |
| Zitronensäure, wasserfrei | 6,00 g |
| Farbstoff E 131 | < 0,01 g |
| Vitaminmischung | 0,19 g |
| Traubenzucker | 150,00 g |
| Saccharose | 100,00 g |
| Restwasser | ca. 700,00 ad 1000,00 ml bzw. g |

| **Vitaminverbindung:** | **Zuwaage**: |
|---|---|
| ThiaminchloridHydrochlorid | 3,88 mg/l |
| Calciumpantothenat | 14,00 mg/l |
| Nicotinsäureamid | 37,80 mg/l |
| Pyridoxinhydrochlorid | 5,11 mg/l |
| L-Ascorbinsäure | 126,00 mg/l |
| Cyanocobalamin | < 0,01 mg/l |
| Gesamt: | ca. 187 mg ≈ 0,19 g |

## Patentansprüche

1. Coffeinhaltiges Getränkeerzeugnis, welches als Hauptbestandteile neben Coffein, Zucker und einem Lösungsmittel, insbesondere Wasser, zusätzlich ein oder mehrere Entgiftungssubstanzen mit insbesondere antioxidativer Wirkung sowie ggf. ein kräftigendes Tonikum, z. B. Ginsengwurzelextrakt, enthält.

2. Coffeinhaltiges Getränkeerzeugnis nach Anspruch 1, **dadurch gekennzeichnet, dass** die Bestandteile in folgenden Mengen vorliegen:
| | |
|---|---|
| Coffein: | ≥ 0,20 g/l |
| Zucker: | ≥ 200,00 g/l |
| Entgiftungssubstanz: | ≥ 0,20 g/l |
und der Rest Lösungsmittel mit hierin gegebenenfalls gelösten weiteren Zusätzen.

3. Getränkeerzeugnis nach Anspruch 1 oder 2, **dadurch gekennzeichnet, dass** zusätzlich ein im menschlichen Körper enthaltener Wachstumszusatz, insbesondere ein Zucker-Alkohol, Berücksichtigung findet.

4. Getränkeerzeugnis nach Anspruch 3, **dadurch gekennzeichnet, dass** es sich bei dem Wachstumszusatz um ein Isomer der Glucose, vorzugsweise Inositol, handelt.

5. Getränkeerzeugnis nach einem der Ansprüche 1 bis 4, **dadurch gekennzeichnet, dass** als Entgiftungssubstanz ein Aminosäureabbauprodukt, insbesondere Taurin, zum Einsatz kommt.

6. Getränkeerzeugnis nach einem der Ansprüche 1 bis 5, **dadurch gekennzeichnet, dass** als Entgiftungssubstanz Ether- oder Esterkonjugate von Pentaerythrit- oder oxidierten Pentaerythritresten mit Lactonen oder Dehydrolactonen von Onsäuren, Uronsäuren oder Zuckersäuren, insbesondere Glucuronolacton, Gulonolacton oder 2-Ketogulonolacton sowie deren Isomere, verwendet werden.

7. Getränkeerzeugnis nach einem der Ansprüche 1 bis 6, **dadurch gekennzeichnet, dass** Vitamine, wie z. B. Vitamin B8 und/oder Vitamin B12, zugesetzt werden.

8. Getränkeerzeugnis nach einem der Ansprüche 1 bis 7, **dadurch gekennzeichnet, dass** Geschmacksstoffe auf insbesondere Pulverbasis mit z. B. Maracuja-, Passionsfrucht-, Pfirsich-, Erdbeer-, Zitronenaroma etc. zur geschmacklichen Variation zugegeben werden.

9. Getränkeerzeugnis nach einem der Ansprüche 1 bis 8, **dadurch gekennzeichnet, dass** ein Konservierungsmittel, wie z. B. Kaliumsorbat, hinzugefügt wird.
